(19)

Europäisches Patentamt
European Patent Office
Office européen des brevets

(11) **EP 2 757 852 A1**

(12) **EUROPEAN PATENT APPLICATION**

(43) Date of publication:
**23.07.2014 Bulletin 2014/30**

(51) Int Cl.:
*H04W 72/12* (2009.01)　　　*H04W 88/06* (2009.01)

(21) Application number: **13305059.1**

(22) Date of filing: **18.01.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Alcatel Lucent**
**75007 Paris (FR)**

(72) Inventor: **Ng, Man Hung**
**Swindon, SN7 5DJ (GB)**

(74) Representative: **Leppard, Andrew John et al**
**Script IP Limited**
**Turnpike House**
**18 Bridge Street**
**Frome**
**Somerset BA11 1BB (GB)**

(54) **Autonomous Denial Indication for in-device coexistence**

(57)　A wireless telecommunications method, a computer program product and user equipment are disclosed. The wireless telecommunications method, comprises transmitting, from user equipment to a network node, an indication that said user equipment is preventing transmission of uplink traffic to said network node. By transmitting the indication to the network node, the network node can be made aware that autonomous denial is taking place and so can prevent any inappropriate or unnecessary reconfigurations occurring due to the non-receipt of that traffic.

| $C_7$ | $C_6$ | $C_5$ | $C_4$ | $C_3$ | $C_2$ | $C_1$ | R |
|---|---|---|---|---|---|---|---|
| P | V | PH (Type 2, PCell) | | | | | |
| R | R | $P_{CMAX,c}$ 1 | | | | | |
| P | V | PH (Type 1, PCell) | | | | | |
| R | R | $P_{CMAX,c}$ 2 | | | | | |
| P | V | PH (Type 1, SCell 1) | | | | | |
| R | R | $P_{CMAX,c}$ 3 | | | | | |

...

| P | V | PH (Type 1, SCell n) | | | | | |
|---|---|---|---|---|---|---|---|
| R | R | $P_{CMAX,c}$ m | | | | | |

Figure 1

EP 2 757 852 A1

**Description**

FIELD OF THE INVENTION

The present invention relates to a wireless telecommunications method, a computer program product and user equipment.

BACKGROUND

Wireless telecommunications networks are known. In those known networks, radio coverage is provided to user equipment, for example, mobile telephones by geographical area. An access node, for example, a base station is located in each geographical area to provide the required radio coverage. User equipment in the area served by a base station receives information and data from the base station and transmits information and data to the base station.

Information and data or other traffic transmitted by base stations to user equipment occurs on channels of radio carriers known as downlink carriers. Information and data or other traffic transmitted by user equipment to base stations occurs on channels of radio carriers known as uplink carriers.

Increasingly, in addition to communicating with such cellular networks, user equipment may also support functionality to transmit and/or receive information and data from other radio networks operating using other radio technologies such as, for example, bluetooth, wireless local area networks or global navigation satellite systems.

Although providing user equipment with this increased functionality is of benefit to the user, unexpected consequences can occur.

Accordingly, it is desired to provide an improved technique for user equipment.

SUMMARY

According to a first aspect there is provided a wireless telecommunications method, comprising: transmitting, from user equipment to a network node, an indication that said user equipment is preventing transmission of uplink traffic to said network node. The first aspect recognises that providing the user equipment with the functionality to send and/or receive transmissions using different radio technologies is that interference between these transmissions can occur. The first aspect also recognises that whilst techniques such as so-called "autonomous denial" are intended to reduce interference by preventing transmission on, for example, particular sub-frames, the decision regarding which sub-frames to select is made by the user equipment. Accordingly, the different user equipment may select different sub-frames and the selection of those sub-frames is unknown to the network. Accordingly, the network may interpret the non-receipt of traffic from the user equipment as being due to the radio condition between the user equipment and the network being poor and may seek to take ameliorative action by instructing some inappropriate or unnecessary reconfiguration.

Accordingly, a wireless telecommunications method is provided. The method may comprise the step transmitting an indication that user equipment is preventing or denying a transmission of uplink traffic. The indication may be transmitted from the user equipment to a network node. By transmitting the indication to the network node, the network node can be made aware that autonomous denial is taking place and so can prevent any inappropriate or unnecessary reconfigurations occurring due to the non-receipt of that traffic.

In one embodiment, said step of transmitting comprises transmitting said indication in an uplink control message. Accordingly, the transmission may occur within a control message transmitted on an uplink channel.

In one embodiment, said step of transmitting comprises transmitting said indication in a control element of said uplink control message. Accordingly, the indication may be transmitted within a control element of the uplink control message.

In one embodiment, said step of transmitting comprises transmitting said indication in a Media Access Control control element of said uplink control message. Accordingly, the indication may be transmitted in a media access control control element of the uplink control message.

In one embodiment, said step of transmitting comprises transmitting said indication in an Extended Power Headroom Media Access Control control element of an uplink control message. Accordingly, the indication may be transmitted in an extended power headroom media access control control element.

In one embodiment, said step of transmitting comprises transmitting said indication in a P-field of an Extended Power Headroom Media Access Control control element of an uplink control message. Accordingly, the indication may be transmitted within a P-field of the message.

In one embodiment, said step of transmitting comprises transmitting said indication by setting said P-field to a value which indicates that user equipment power backoff has been applied. By setting the P-field to that value, an existing message may be utilised which indicates to the network node that the user equipment is transmitting with reduced power and so existing functionality within the network node which may prevent reconfiguration occurring during reduced power transmissions may be utilised also when autonomous denial is taking place.

In one embodiment, the method comprises determining that uplink traffic should be prevented to reduce interference; and preventing transmission of said uplink traffic. Accordingly, the user equipment may determine that in order to prevent or reduce interference with other transmissions, the transmission of uplink traffic should be prevented. The user equipment may also then prevent the transmission of that uplink channel in order to ameliorate the effects of any interference.

In one embodiment, said step of determining comprises determining that uplink traffic should be prevented to reduce interference in bands which are in one of adjacent and sub-harmonic with respect to said uplink traffic. Accordingly, the interference may occur in bands related to the bands on which the uplink traffic is transmitted.

In one embodiment, said step of determining comprises determining that uplink traffic should be prevented to reduce interference with traffic from other radio technologies.

In one embodiment, said preventing comprises preventing transmission of uplink traffic over an uplink traffic channel.

In one embodiment, said preventing comprises preventing transmission of subframes of uplink traffic over an uplink traffic channel.

In one embodiment, said indication indicates that said user equipment is preventing transmission of uplink traffic over an uplink traffic channel.

In one embodiment, said indication indicates that said user equipment is preventing transmission of subframes of uplink traffic over an uplink traffic channel.

According to second aspect, there is provided a computer program product operable, when executed on a computer, to perform the method steps of the first aspect.

According to a third aspect, there is provided user equipment, comprising: transmission logic operable to transmit, to a network node, an indication that said user equipment is preventing transmission of uplink traffic to said network node.

In one embodiment, said transmission logic is operable to transmit said indication in an uplink control message.

In one embodiment, said transmission logic is operable to transmit said indication in a control element of said uplink control message.

In one embodiment, said transmission logic is operable to transmit said indication in a Media Access Control control element of said uplink control message.

In one embodiment, said transmission logic is operable to transmit said indication in an Extended Power Headroom Media Access Control control element of an uplink control message.

In one embodiment, said transmission logic is operable to transmit said indication in a P-field of an Extended Power Headroom Media Access Control control element of an uplink control message.

In one embodiment, said transmission logic is operable to transmit said indication by setting said P-field to a value which indicates that user equipment power backoff has been applied.

In one embodiment, said user equipment comprises determining logic operable to determine that uplink traffic should be prevented to reduce interference; and prevention logic operable to prevent transmission of said uplink traffic.

In one embodiment, said determining logic is operable to determine that uplink traffic should be prevented to reduce interference in bands which are in one of adjacent and sub-harmonic with respect to said uplink traffic.

In one embodiment, said determining logic is operable to determine that uplink traffic should be prevented to reduce interference with traffic from other radio technologies.

In one embodiment, said prevention logic is operable to prevent transmission of uplink traffic over an uplink traffic channel.

In one embodiment, said prevention logic is operable to prevent transmission of subframes of uplink traffic over an uplink traffic channel.

In one embodiment, said indication indicates that said user equipment is preventing transmission of uplink traffic over an uplink traffic channel.

In one embodiment, said indication indicates that said user equipment is preventing transmission of subframes of uplink traffic over an uplink traffic channel.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

BRIEF DESCRIPTION OF THE DRAWINGS

Embodiments of the present invention will now be described further, with reference to the accompanying drawings, in which:

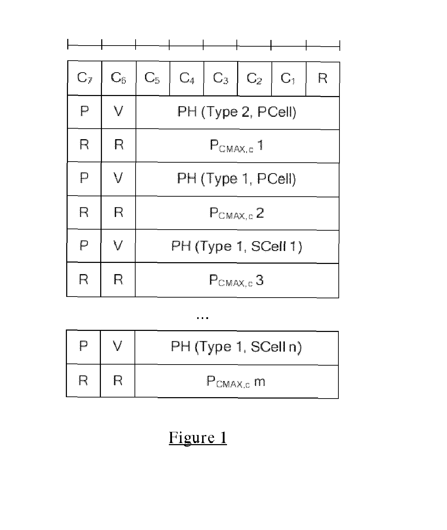

Figure 1 illustrates the content of an extended power headroom media access control (MAC) control element.

DESCRIPTION OF THE EMBODIMENTS

Overview

As mentioned above, in order to provide for in-device co-existence of wireless cellular transmissions together with other radio technologies such as blue tooth, wireless local area networks or global navigation satellite systems transmissions in adjacent or sub-harmonic bands, a procedure known as "autonomous denial" is provided within user equipment. Autonomous denials is a procedure where the user equipment denies wireless cellular uplink transmissions in order to protect against interference with critical signalling such as, for example, connection set up events being performed by those other radio technologies .

Such autonomous denial is implemented by preventing or denying the user equipment the opportunity to perform cellular uplink transmissions over certain sub-frames. Typically, the amount of denial will be limited by setting a maximum allowed number of sub-frames within which the user equipment can be denied from performing transmissions. The amount of denial is typically specified over a relatively long time period. This amount of denial is typically configured a network node such as, for example, a base station, which determines the denial amount or rate. The user equipment then determines which actual sub-frames are to be denied. If the network does not configure any denial rate, then the user equipment should not perform any autonomous denial. However, when a denial rate is set then the user equipment determines which sub-frames to be denied and, previously, no further feedback is provided from the user equipment to the network.

Whilst autonomous denial helps reduce interference with other radio technologies, this may impact on the transmissions between the user equipment and the base station since the base station is unable to distinguish between the user equipment performing autonomous denial (i.e. non-reception of uplink traffic due to the user equipment deliberately not sending subframes) and poor channel condition (i.e. non-reception of uplink traffic due to poor channel conditions). This can, for example, have an impact on the physical downlink control channel (PDCCH) link adaption accuracy and capacity. This can be ameliorated by configuring a good channel condition to avoid missing detection during testing. However, since the sub-frames denials are left to user equipment implementation, it is not possible to give a generic indication on how to configure the number of trigger events in a certain measurement period.

Accordingly, it can be seen that the provision of autonomous denial of sub-frames within the user equipment can cause difficulties for assessing the performance of channels between the user equipment and the base station and may lead to the channels being incorrectly configured. Existing techniques provide no solution to this problem because the base station or test equipment cannot distinguish between the user equipment performing autonomous denial and simply missing the detection of sub-frames.

Accordingly, embodiments provide a technique where the user equipment is able to indicate that autonomous denial is taking place. Embodiments provide user equipment which detects that autonomous denial is to take place and prevents the transmission of traffic whilst transmitting an indication to the network to indicate that transmissions are being prevented by the user equipment. This enables the network to identify that autonomous denial is taking place and avoids misinterpreting the lack of reception of traffic from the user equipment as being due to non-receipt of traffic due to poor channel conditions. This enables the network to prevent adaption or reconfiguration of the channels unnecessarily, and may avoid the need for the network to indicate non-receipt of traffic.

Embodiments utilise an existing field of an existing message which indicates to the network that power reduction is being performed by the user equipment which advantageously activates existing logic which prevents such reconfiguration or adaption. In this way, autonomous denial can readily be signalled to the network, which is able to take appropriate account of this.

Extended Power Headroom Media Access Control Control Element

Figure 1 illustrates the content of an extended power headroom media access control (MAC) control element, as specified in 3GPP TS 36.321. This variable length message is identified by a MAC protocol data unit (PDU) subheader with a specified logical channel identifier (LCID). Within the extended power headroom MAC control element, there is provided a P field which indicates whether the user equipment applies power back off due to power management (as allowed by P-MPRc in TS 36.101). The user equipment shall set P=1 if the corresponding PCMAX,c field would have had a different value if no power back off due to power management had been applied. In other words, this field indicates to the network that the power used by the user equipment has been reduced. The network is then able to take account of this when assessing the traffic received from the user equipment. Typically, the network will be aware that traffic may not be received from the user equipment when operating under these conditions and will take account of this accordingly when deciding whether to take any ameliorative action due to non-receipt of traffic.

Currently, the user equipment is permitted to apply power management maximum power reduction for ensuring compliance with applicable electro-magnetic energy absorption requirements and addressing unwanted emissions/self-desense requirements in case of simultaneous transmissions on multiple radio access technologies for scenarios not within the scope of the current specifications. In addition, power management maximum power reduction is permitted to ensure compliance with applicable electro-magnetic energy absorption requirements in case proximity detection is used in order to address such requirements that require a lower maximum output power. In addition, embodiments also apply power management maximum power reduction for autonomous denial for in-device co-existence.

Power management maximum power reduction is introduced in the PCMAX equation such that the user equipment can report to the base station the available maximum output transmit power. This information can be used together with the P field in the extended power headroom MAC control element (which indicates whether the user equipment applies power back-off due to power management) by the base station or test equipment to distinguish between loss of traffic due to poor channel conditions and loss of traffic due to autonomous denial by the user equipment.

Although embodiments utilise the P field of the extended power headroom MAC control element, it will be appreciated that any other field may be reconfigured to indicate such autonomous denial, or that a different existing message may be used, or that a new message may be provided.

<u>Power Management Maximum Power Reduction</u>

The following describes the circumstances under which power management maximum power reduction may be performed according to embodiments.

**Configured transmitted power**

The user equipment (UE) is allowed to set its configured maximum output power $P_{CMAX}$. The configured maximum output power $P_{CMAX}$ is set within the following bounds:

$$P_{CMAX\_L} \leq P_{CMAX} \leq P_{CMAX\_H}$$

Where

- $P_{CMAX\_L}$ = MIN {$P_{EMAX}$ - $\Delta T_C$, $P_{PowerClass}$ - MAX(MPR + A-MPR, P-MPR) - $\Delta T_C$}
- $P_{CMAX\_H}$ = MIN {$P_{EMAX}$, $P_{PowerClass}$}
- $P_{EMAX}$ is the value given to IE *P-Max.*
- $P_{PowerClass}$ is the maximum UE power specified in Table 1 without taking into account the tolerance specified in the Table 1.
- MPR and A-MPR are specified.
- P-MPR is the allowed maximum output power reduction for;

    a) Ensuring compliance with applicable electromagnetic energy absorption requirements and addressing unwanted emissions / self desense requirements in case of simultaneous transmissions on multiple RAT(s) for scenarios not in scope of 3GPP RAN specifications.
    b) Ensuring compliance with applicable electromagnetic energy absorption requirements in case of proximity detection is used to address such requirements that require a lower maximum output power.
    c) Ensuring in-device coexistence of E-UTRA with other radio technologies such as BT/WLAN or GNSS in adjacent or sub-harmonic bands.

The UE shall apply P-MPR only for the above cases. For UE conducted conformance testing P-MPR shall be o dB. NOTE 1: P-MPR was introduced in the $P_{CMAX}$ equation such that the UE can report to the base station (eNB) the available maximum output transmit power. This information can be used by the eNB for scheduling decisions. NOTE 2: P-MPR may impact the maximum uplink performance for the selected UL transmission path.

- $\Delta T_C$ = 1.5 dB when Note 2 in Table 1 applies
- $\Delta T_C$ = o dB when Note 2 in Table 1 does not apply

The measured configured maximum output power $P_{UMAX}$ shall be within the following bounds:

$$P_{CMAX\_L} - T(P_{CMAX\_L}) \leq P_{UMAX} \leq P_{CMAX\_H} + T(P_{CMAX\_H})$$

Where $T(P_{CMAX})$ is defined by the tolerance table below and applies to $P_{CMAX-L}$ and $P_{CMAX\_H}$ separately.

Table 1: PCMAX tolerance

| $P_{CMAX}$ (dBm) | Tolerance $T(P_{CMAX})$ (dB) |
|---|---|
| $23 < PCMAX \leq 33$ | 2.0 |
| $1 \leq P_{CMAX} \leq 23$ | 2.0 |
| $20 \leq P_{CMAX} < 21$ | 2.5 |
| $9 \leq P_{CMAX} < 20$ | 3.5 |
| $18 \leq P_{CMAX} < 19$ | 4.0 |
| $3 \leq P_{CMAX} < 18$ | 5.0 |
| $8 \leq P_{CMAX} < 13$ | 6.0 |
| $-40 \leq P_{CMAX} < 8$ | 7.0 |

The concept and procedure of autonomous denials have been agreed for in-device coexistence (IDC). The IDC deals with in-device coexistence of LTE (long term evolution transmissions) with other radio technologies such as BT/WLAN or GNSS in adjacent or sub-harmonic bands. Autonomous denial refers to a UE denying LTE UL transmissions to protect some critical signalling on the other radio, e.g. connection-setup events. The amount of denials will be limited using a maximum allowed denial subframes over a long time period which will be configured by the eNB. It is left up to eNB implementation to configure a proper denial rate. It is left up to UE implementation which subframes are denied. No further feedback is provided from the UE to the eNB. If the eNB does not configure any denial rate, the UE shall not perform any autonomous denials.

The LTE UL autonomous denial for IDC in rare cases may have impact on PDCCH link adaptation accuracy and PDCCH capacity. To evaluate the potential impacts on UL demodulation performance, two things need to be considered.

- How to identify the autonomous denial?

The base station cannot distinguish the behaviour of LTE UL autonomous denial from missing detection (due to bad channel condition). It can be solved by configuring good channel condition to avoid the missing detection during the test.

- How to trigger the autonomous denial for test?

Detailed test configurations for RF conformance test need to be known. Since the details of the IDC indication trigger are left up to UE implementation, a generic indication on how to configure a number of trigger events in a certain measurement period cannot be given. Different chip vendors may have different implementations. Therefore, the potential impacts of LTE UL autonomous denial could not be evaluated based on current decisions. If a set of specific trigger events of LTE UL autonomous denial can be given in further release, corresponding test cases could be defined.

As discussed above, the base station or test equipment cannot distinguish the behaviour of LTE UL autonomous denial from missing detection based on current decisions, and this may have impact on PDCCH link adaptation accuracy and PDCCH capacity.

On the other hand, a P-field in the Extended Power Headroom MAC Control Element for Power Headroom Reporting is defined:

- P: this field indicates whether the UE applies power backoff due to power management (as allowed by P-MPRc). The UE shall set P=1 if the corresponding PCMAX,c field would have had a different value if no power backoff due to power management had been applied;

According to the current standards, an UE is allowed to apply Power Management Maximum Power Reduction (P-MPR) for:

a) Ensuring compliance with applicable electromagnetic energy absorption requirements and addressing unwanted emissions / self desense requirements in case of simultaneous transmissions on multiple RAT(s) for scenarios not in scope of 3GPP RAN specifications.
b) Ensuring compliance with applicable electromagnetic energy absorption requirements in case of proximity detection is used to address such requirements that require a lower maximum output power.

The P-MPR is introduced in the PCMAX equation such that the UE can report to the eNB the available maximum output transmit power. This information can be used together with the P-field in the Extended Power Headroom MAC Control Element (which indicates whether the UE applies power backoff due to power management) by the eNB or test equipment to distinguish the behaviour of LTE UL autonomous denial from missing detection.

However, it is specified that the UE shall apply P-MPR only for the above cases. Therefore, a change is required to be agreed to allow the use of P-MRP for autonomous denial for in-device coexistence:

c) Ensuring in-device coexistence of E-UTRA with other radio technologies such as BT/WLAN or GNSS in adjacent or sub-harmonic bands.

Other signals may be used to inform the eNB that the UE use LTE UL autonomous denial for in-device coexistence, but other standards changes in the higher layer signalling (MAC or RRC) would then be necessary.

It can be seen that the base station or test equipment cannot currently distinguish the behaviour of LTE UL autonomous denial from missing detection, and this may have impact on PDCCH link adaptation accuracy and PDCCH capacity. Embodiments allow the use of P-MRP for autonomous denial for in-device coexistence to solve the described issue.

Accordingly, it can be seen that embodiments enable the user equipment to use autonomous denial of uplink transmissions to protect some critical signal on other radio channels (for example, connection set up events) within limits configured by the network. In addition, the user equipment can inform the network about the autonomous denial using the P field in the power headroom report.

It will be appreciated that without using this technique, the base station or test equipment cannot distinguish the behaviour of uplink autonomous denial from missing detection (due to bad channel conditions) and the potential impact of the autonomous denial cannot be evaluated.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

**Claims**

1. A wireless telecommunications method, comprising:

   transmitting, from user equipment to a network node, an indication that said user equipment is preventing transmission of uplink traffic to said network node.

2. The method of claim 1, wherein said step of transmitting comprises transmitting said indication in a control element of said uplink control message.

3. The method of claim 1 or 2, wherein said step of transmitting comprises transmitting said indication in a Media Access Control control element of said uplink control message.

4. The method of any preceding claim, wherein said step of transmitting comprises transmitting said indication in an Extended Power Headroom Media Access Control control element of an uplink control message.

5. The method of any preceding claim, wherein said step of transmitting comprises transmitting said indication in a P-field of an Extended Power Headroom Media Access Control control element of an uplink control message.

6. The method of any preceding claim, wherein said step of transmitting comprises transmitting said indication by setting said P-field to a value which indicates that user equipment power backoff has been applied.

7. The method of any preceding claim, comprising:

   determining that uplink traffic should be prevented to reduce interference; and
   preventing transmission of said uplink traffic.

8. The method of claim 7, wherein said step of determining comprises determining that uplink traffic should be prevented to reduce interference in bands which are in one of adjacent and sub-harmonic with respect to said uplink traffic.

9. The method of claim 7 or 8, wherein said step of determining comprises determining that uplink traffic should be prevented to reduce interference with traffic from other radio technologies.

10. The method of any one of claims 7 to 9, wherein said preventing comprises preventing transmission of uplink traffic over an uplink traffic channel.

11. The method of any one of claims 7 to 10, wherein said preventing comprises preventing transmission of subframes of uplink traffic over an uplink traffic channel.

12. The method of any preceding claim, wherein said indication indicates that said user equipment is preventing transmission of uplink traffic over an uplink traffic channel.

13. The method of any preceding claim, wherein said indication indicates that said user equipment is preventing transmission of subframes of uplink traffic over an uplink traffic channel.

14. A computer program product operable, when executed on a computer, to perform the method steps of any preceding claim.

15. User equipment, comprising:

transmission logic operable to transmit, to a network node, an indication that said user equipment is preventing transmission of uplink traffic to said network node.

EP 2 757 852 A1

| C₇ | C₆ | C₅ | C₄ | C₃ | C₂ | C₁ | R |
|----|----|----|----|----|----|----|----|
| P | V | \multicolumn{6}{c} PH (Type 2, PCell) |
| R | R | $P_{CMAX,c}$ 1 |
| P | V | PH (Type 1, PCell) |
| R | R | $P_{CMAX,c}$ 2 |
| P | V | PH (Type 1, SCell 1) |
| R | R | $P_{CMAX,c}$ 3 |

...

| P | V | PH (Type 1, SCell n) |
|---|---|---|
| R | R | $P_{CMAX,c}$ m |

Figure 1

10

Europäisches
Patentamt

European
Patent Office

Office européen
des brevets

# EUROPEAN SEARCH REPORT

**Application Number**

EP 13 30 5059

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2012/019564 A1 (MEDIATEK INC [CN]; FU I-KANG [CN]; PLUMB WILLIAM [US]) 16 February 2012 (2012-02-16) * figures 4-8 * * paragraph [0009] - paragraph [0010] * * paragraph [0026] - paragraph [0030] * * paragraph [0038] * | 1,7-15 | INV. H04W72/12 ADD. H04W88/06 |
| E | WO 2013/063742 A1 (RENESAS MOBILE CORP [JP]; WEI NA [CN]; GAO CHUNYAN [CN]; HONG WEI [CN]) 10 May 2013 (2013-05-10) * paragraph [0010] - paragraph [0012] * | 1,14,15 | |
| X | WO 2012/021879 A2 (INTERDIGITAL PATENT HOLDINGS [US]; COMSA VIRGIL [CA]; PANI DIANA [CA];) 16 February 2012 (2012-02-16) * paragraph [0289] - paragraph [0292] * | 1-15 | |
| X | US 2012/176923 A1 (HSU CHIA-CHUN [TW] ET AL) 12 July 2012 (2012-07-12) * paragraphs [0008], [0024], [0030], [0036], [0050] * | 1-15 | |

-/--

TECHNICAL FIELDS
SEARCHED (IPC)

H04W

The present search report has been drawn up for all claims

| Place of search | Date of completion of the search | Examiner |
|---|---|---|
| Munich | 2 July 2013 | Gavin Alarcon, Oscar |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

Europäisches
Patentamt

European
Patent Office

Office européen
des brevets

# EUROPEAN SEARCH REPORT

Application Number

EP 13 30 5059

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HUAWEI (RAPPORTEUR): "Report of email discussion [78#49] LTE/IDC: IDC indication", 3GPP DRAFT; R2-123534 REPORT OF EMAIL DISCUSSION 78#49 IDC INDICATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; , vol. RAN WG2, no. Qingdao, China; 20120813 - 20120817 7 August 2012 (2012-08-07), XP050665601, Retrieved from the Internet: URL:http://www.3gpp.org/ftp/tsg_ran/WG2_RL2/TSGR2_79/Docs/ [retrieved on 2012-08-07] * Section 2.6 * ----- | 1-15 | |
| X | "3rd Generation Partnership Project; Technical Specification Group Radio Access Network; Evolved Universal Terrestrial Radio Access (E-UTRA); Study on signalling and procedure for interference avoidance for in-device coexistence (Release 11)", 3GPP STANDARD; 3GPP TR 36.816, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V11.0.0, 24 June 2011 (2011-06-24), pages 1-40, XP050553600, [retrieved on 2011-06-24] * Section 5.2.1.3 * ----- | 1-15 | TECHNICAL FIELDS SEARCHED (IPC) |

The present search report has been drawn up for all claims

| Place of search | Date of completion of the search | Examiner |
|---|---|---|
| Munich | 2 July 2013 | Gavin Alarcon, Oscar |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 13 30 5059

This annex lists the patent family members relating to the patent documents cited in the above-mentioned European search report.
The members are as contained in the European Patent Office EDP file on
The European Patent Office is in no way liable for these particulars which are merely given for the purpose of information.

02-07-2013

| Patent document cited in search report | | Publication date | Patent family member(s) | | Publication date |
|---|---|---|---|---|---|
| WO 2012019564 | A1 | 16-02-2012 | CN | 102484805 A | 30-05-2012 |
| | | | CN | 102511157 A | 20-06-2012 |
| | | | EP | 2481204 A1 | 01-08-2012 |
| | | | EP | 2481237 A1 | 01-08-2012 |
| | | | TW | 201212559 A | 16-03-2012 |
| | | | TW | 201212560 A | 16-03-2012 |
| | | | US | 2012040620 A1 | 16-02-2012 |
| | | | US | 2012040715 A1 | 16-02-2012 |
| | | | WO | 2012019561 A1 | 16-02-2012 |
| | | | WO | 2012019564 A1 | 16-02-2012 |
| WO 2013063742 | A1 | 10-05-2013 | NONE | | |
| WO 2012021879 | A2 | 16-02-2012 | CA | 2808274 A1 | 16-02-2012 |
| | | | CN | 103069911 A | 24-04-2013 |
| | | | EP | 2604085 A2 | 19-06-2013 |
| | | | SG | 187831 A1 | 28-03-2013 |
| | | | US | 2012207040 A1 | 16-08-2012 |
| | | | WO | 2012021879 A2 | 16-02-2012 |
| US 2012176923 | A1 | 12-07-2012 | CN | 102714799 A | 03-10-2012 |
| | | | TW | 201230705 A | 16-07-2012 |
| | | | US | 2012176923 A1 | 12-07-2012 |
| | | | WO | 2012092851 A1 | 12-07-2012 |

EPO FORM P0459

For more details about this annex : see Official Journal of the European Patent Office, No. 12/82